# EUROPÄISCHE PATENTSCHRIFT

(11) **EP 1 373 704 B1**
(45) Veröffentlichungstag und Bekanntmachung des Hinweises auf die Patenterteilung: **11.08.2004**
(21) Anmeldenummer: 02727234.3
(22) Anmeldetag: 15.03.2002
(51) Int. Cl.: F02M 25/08, F16K 31/06

(54) **MAGNETVENTIL**
MAGNETIC VALVE
ELECTROVANNE

(30) Priorität: 16.03.2001 DE 10112661
(43) Veröffentlichungstag der Anmeldung: 02.01.2004
(73) Patentinhaber: ROBERT BOSCH GMBH, 70442 Stuttgart (DE)
(72) Erfinder: KRIMMER, Erwin, 73655 Pluederhausen (DE); SCHULZ, Wolfgang, 74321 Bietigheim-Bissingen (DE); MEISIEK, Achim, 73635 Rudersberg (DE)
(86) Internationale Anmeldenummer: PCT/DE2002/000956
(87) Internationale Veröffentlichungsnummer: WO 2002/075143

(56) Entgegenhaltungen:
- DE-A- 19 901 090
- US-A- 5 878 991
- US-A- 6 058 913

## Beschreibung

### Stand der Technik

Die Erfindung geht aus von einem Magnetventil nach der Gattung des Anspruchs 1.

Aus der DE 199 01 090 A1 ist ein Magnetventil bekannt, das ein Dichtungs- und Dämpfungsglied mit einem elastischen Bereich aufweist, das im Betrieb aufgrund des anliegenden Unterdrucks eine Kraft entgegen der Richtung des schließenden Ventils ausübt. Dies erhöht die erforderliche Kraft zum Öffnen des Ventils.

### Vorteile der Erfindung

Das erfindungsgemäße Magnetventil mit den kennzeichnenden Merkmalen des Anspruchs 1 hat demgegenüber den Vorteil, dass auf einfache Art und Weise eine Kraft, die an dem elastischen Bereich eines Dichtungs- und Dämpfungsglieds wirkt, ausgeglichen wird, die durch die anliegende Druckdifferenz im Ventil entsteht. Dadurch wird ein besserer Kennlinienverlauf des Durchflusses über den anliegenden Differenzdruck erreicht.

Durch die in den abhängigen Ansprüchen aufgeführten Maßnahmen sind vorteilhafte Weiterbildungen und Verbesserungen des im Anspruch 1 genannten Magnetventils möglich.

Besonders vorteilhaft ist es, wenn der elastische Bereich des Dichtungs- und Dämpfungsglieds halbbogenförmig oder halbkreisförmig ausgebildet ist.

### Zeichnung

Ausführungsbeispiele der Erfindung sind in der Zeichnung vereinfacht dargestellt und in der nachfolgenden Beschreibung näher erläutert.

Es zeigen
Figur 1 ein erfindungsgemäßes Magnetventil,
Figur 2 eine vergrößerte Darstellung eines Dichtungs- und Dämpfungsglieds des erfindungsgemäß ausgebildeten Magnetventils,
Figur 3a zeigt ein Ventilglied mit einem Dichtungs- und Dämpfungsglied nach dem Stand der Technik, Figur 3b ein Ventilglied mit einem Dichtungs- und Dämpfungsglied eines erfindungsgemäßen Magnetventils, und
Figur 4a und Figur 4b zeigen wie Kräfte an einem Dichtungsund Dämpfungsglied wirken.

### Beschreibung der Ausführungsbeispiele

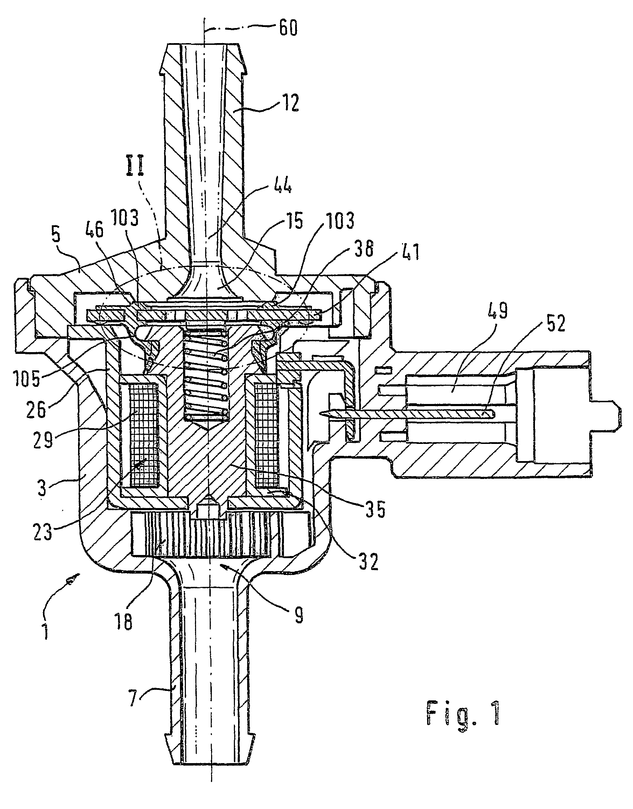

Ein in Figur 1 im Längsschnitt dargestelltes Tankentlüftungsventil 1 als Ausführungsbeispiel für ein Magnetventil 1, dient zum dosierten Zumischen von aus einem Brennstofftank einer (nicht dargestellten) gemischverdichteten fremdgezündeten Brennkraftmaschine verflüchtigtem Brennstoff in die Brennkraftmaschine, z.B. in ein Ansaugrohr oder bei einer Benzin-Direkteinspritzung direkt in einen Zylinder der Brennkraftmaschine und ist Teil eines nicht näher dargestellten Brennstoffverdunstungs-Rückhaltesystems einer Brennkraftmaschine. Der Aufbau und die Funktion derartiger Brennstoffverdunstungs-Rückhaltesysteme ist beispielsweise der "Bosch-Technische Unterrichtung Motormanagement Motonic", zweite Ausgabe, August 1993, Seiten 48 und 49, zu entnehmen. Ein Tankentlüftungsventil 1 und dessen Funktion geht beispielsweise auch aus der DE 199 01 090 A1, die ausdrücklich Bestandteil dieser Offenbarung sein soll, hervor.

Das Tankentlüftungsventil 1 weist mehrere Gehäuseteile, beispielsweise ein zweiteiliges Gehäuse mit einem ersten Gehäuseteil 3, das beispielsweise topfförmig ausgebildet ist, und ein dieses abschließendes, beispielsweise kappenförmiges Gehäuseteil 5 auf. Das Gehäuseteil 3 hat einen Einlass 7 zum Anschließen an einen Entlüftungsstutzen des Brennstofftanks oder an einen diesem nachgeschalteten, mit Aktivkohle gefüllten Speicher für den Verflüchtigungsbrennstoff. Der Einlass 7 hat eine Einlassöffnung 9, die im Bereich des Gehäuseteils 3 eines Bodens 55 angeordnet ist.
Das Gehäuseteil 5 weist ein Auslass 12 zum Anschließen an das Ansaugrohr der Brennkraftmaschine auf. Der Auslass 12 weist eine Auslassöffnung 15 oder Ventilöffnung 15 auf.
Der Einlass 7 und der Auslass 12 sind jeweils an den Gehäuseteilen 3, 5 beispielsweise entlang einer Axialrichtung 60 ausgerichtet.

Im Inneren des topfförmigen Gehäuseteils 3 ist ein Elektromagnet 23 angeordnet. Der Elektromagnet 23 weist ein beispielsweise topfförmiges Magnetgehäuse 26 mit einem den Topfboden durchdringenden, zur Ventilachse koaxialen, zylindrischen Magnetkern 35 und mit einer zylindrischen Erregerspule 29 auf, die auf einem Spulenträger 32 sitzt, der im Magnetgehäuse 26 den Magnetkern 35 umschließt.
Auf seiner dem Auslass 12 zugewandten Seite ist eine entgegen der Rückstellkraft einer Rückstellfeder 38 verstellbare Ankerplatte 41 vorgesehen, die von dem Elektromagneten 23 angezogen wird und ein Ventilglied bildet, das an einem an dem Gehäuseteil 5 direkt oder indirekt angeordneten Dichtsitz zur Anlage kommt.
Der Auslass 12 weist ein Strömungselement 44 in Form einer Lavaldüse auf. Es versteht sich jedoch, dass das Strömungselement 44 nicht auf eine Lavaldüse beschränkt ist und auch als Blende oder Drossel ausgebildet sein kann. Das Strömungselement 44 ist so ausgebildet, dass die Fläche seines engsten Strömungsquerschnitts kleiner ist als die Fläche des Öffnungsquerschnitts des Dichtsitzes 103.
An der ein Ventilglied bildenden Ankerplatte 41 ist weiterhin ein Dichtungs- und Dämpfungsglied 46 angeordnet. Das Dichtungs- und Dämpfungsglied 46 ist an der Ankerplatte 41 und am Magnetkern 35 angeordnet und verbindet diese als elastisches Element miteinander.

Das Gehäuse 3, 5 weist beispielsweise einen einteilig mit dem Gehäuse 3, 5 verbundenen Stecker 49 auf, der elektrische Anschlusselemente 52 zum Anschluss an äussere Steckkontakte aufweist.
In dem Gehäuseteil 3 in der Nähe der Einlassöffnung 9 ist bspw. ein Filter 18 angeordnet.
Das Medium, das beispielsweise Partikel aus dem Aktivkohlefilter enthalten kann, strömt durch die Einlassöffnung 9 durch den Filter 18, der diese Partikel zurückhält, an dem Magnetgehäuse 26 vorbei hin in Richtung zum Auslass 12.

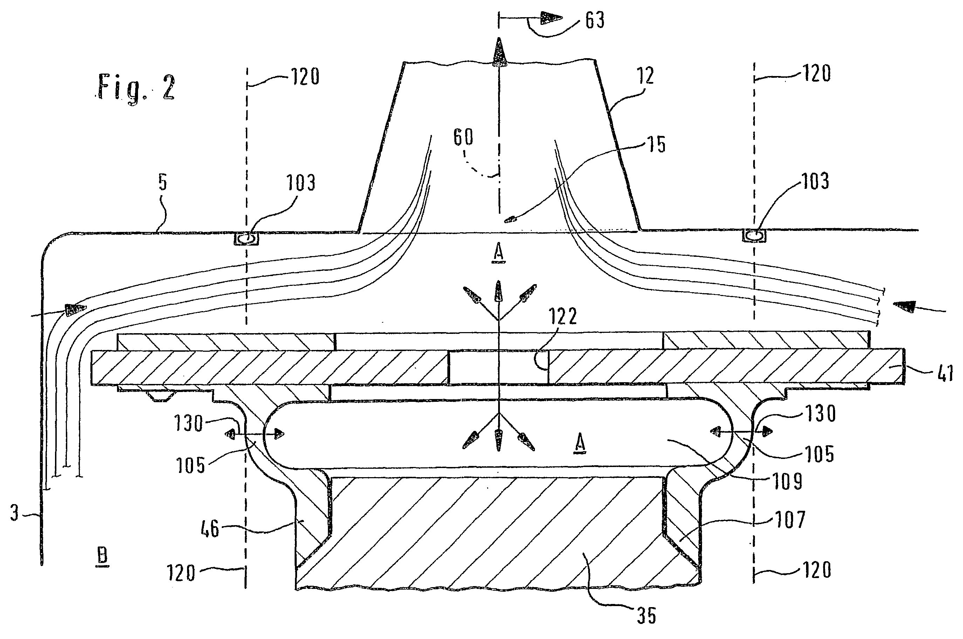

Figur 2 zeigt eine vergrößerte Darstellung eines Dichtungsund Dämpfungsglieds 46 eines erfindungsgemäß ausgebildeten Magnetventils 1 gemäss des mit II gekennzeichneten Bereiches in Figur 1.
Das Dichtungs- und Dämpfungsglied 46 bildet beim Anliegen am zweiten Gehäuseteils 5 den Dichtsitz 103.
Wenn das Dichtungs- und Dämpfungsglied 46 den Auslass 12 abdichtet, so herrscht in dem mit A gekennzeichneten Bereich im Betrieb der Brennkraftmaschine im Auslass 12 ein Unterdruck, der über eine Druckausgleichsöffnung 122 in der Ankerplatte 41 auch in einen Hohlraum 109 zwischen Ankerplatte 41, Magnetkern 35 und einem elastischen Bereich 105 des Dichtungs- und Dämpfungsglieds 46 wirkt. Der Bereich A umfasst etwa den Bereich zwischen Ventilglied 41 und Auslass 12, begrenzt durch den Dichtsitz 103. Ein mit B gekennzeichneter Bereich schließt sich außerhalb des Dichtsitzes 103 an den Bereich A an und umfasst einen Bereich zwischen Ventilglied 41 und Einlass 7. Hier herrscht ein höherer Druck als im Bereich A, bspw. ein Gasdruck des Brennstoffs oder der Umgebungsdruck.
Das Dichtungs- und Dämpfungsglied 46 weist zwischen Ventilglied 41 und Magnetkern 35 den elastischen Bereich 105 und einen Endbereich 107 auf, der in eine zu ihm komplementär ausgebildete Ausnehmung des Magnetkerns 35 hineinragt und an dem Magnetkern 35 befestigt ist. Das Dichtungs- und Dämpfungsglied 46 ist radial um die Axialrichtung 60 umlaufend vorhanden.
Bei einer Bewegung der Ankerplatte 41 wird durch Axialbewegung des elastischen Bereichs 105 sichergestellt, dass der dem Magnetkern 35 zugewandte Hohlraum 109 gegenüber der Umgebung abgedichtet ist. Durch die Druckausgleichsöffnung 122 und das Dichtungs- und Dämpfungsglied 46 ist sichergestellt, dass der magnetkernseitige Hohlraum 109 mit dem dichtsitzseitigen Hohlraum 109 und damit mit dem Auslass 12 druckausgeglichen verbunden ist. Durch diesen Druckausgleich muss beim Anziehen der Ankerplatte 41 durch den Elektromagneten 23 lediglich noch die Rückstellkraft der Rückstellfeder 38, eventuell auch noch eine geringe auf einen Teil des Dichtelements 46 wirkende Druckkraft überwunden werden, nicht jedoch die Kraft eines Differenzdruckes, der zwischen dem elektromagnetseitigen Hohlraum 109 und dem ventilsitzseitigen Hohlraum 109 entstehen und auf die beiderseitigen Flächen der Ankerplatte 41 wirken würde, wenn keine Ausgleichsöffnung 122 vorhanden wäre.

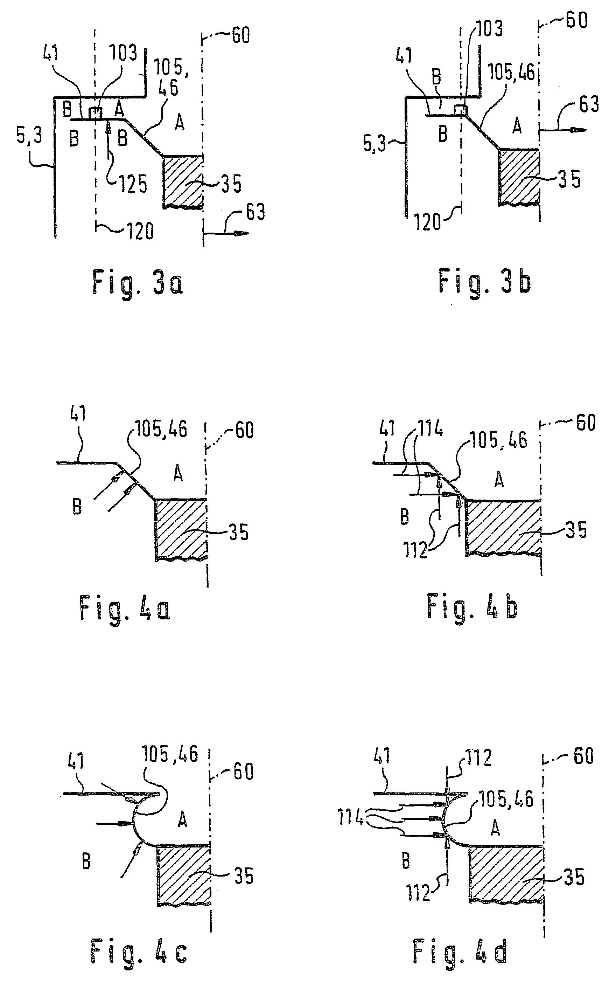

Der elastische Bereich 105 ist im axialen Querschnitt bogenförmig oder, wie in Figur 2 dargestellt, kreisförmig ausgebildet.
Wichtig dabei ist, dass der Dichtsitz 103 in Axialrichtung 60 auf einer Linie 120 mit einer äußeren oder inneren, d.h. äussere Ausdehnung weniger Wandstärke des elastischen Bereichs 105, radialen Ausdehnung des elastischen Bereichs 105 liegt (Fig. 3b). Der Dichtsitz 103 ist nicht notwendigerweise eine scharf definierte Linie, sondern kann auch eine bestimmte Breite aufweisen, d.h. die Lage der Linie 120 ist nicht scharf definiert. Die Linie 120 kann in radialer Richtung 63 durch einen äusseren oder inneren Rand des Dichtsitzes 103 und durch einen äusseren oder inneren Rand des elastischen Bereichs 105 verlaufen. Darüber hinaus ist auch noch eine geringe Verschiebung der Linie 120 möglich. Dies ist durch einen Pfeil 130 in radialer Richtung 63 in der Figur 2 angedeutet.

Figur 3a zeigt ein Ventilglied 41 mit einem Dichtungs- und Dämpfungsglied 46 und dessen Anordnung zum Dichtsitz 103 nach dem Stand der Technik.

In der radialen Richtung 63 gesehen, senkrecht zur Axialrichtung 60, liegt der Dichtsitz 103 auf einer Linie 120 in Axialrichtung 60 außerhalb einer radialen Ausdehnung des elastischen Bereichs 105.
Die Buchstaben A und B kennzeichnen jeweils den Unterdruck bzw. das Hochdruckgebiet.
In Radialrichtung 63 gesehen außerhalb des Dichtsitzes 103 wirkt auf das Ventilglied 41 in Axialrichtung 60 gesehen von oben und unten der gleiche Druck, gekennzeichnet durch den Buchstaben B.
Zwischen dem Dichtsitz 103 und der radialen Ausdehnung des elastischen Bereichs 105 wirkt auf der einen Seite des Ventilglieds 41 der Unterdruck A und auf der anderen Seite der höhere Druck B. Dadurch kommt es zu einer Zusatzkraft 125 in Schließrichtung, gekennzeichnet durch einen Pfeil, die beim Öffnen von dem Elektromagnet 23 zusätzlich aufgebracht werden muss.

Figur 3b zeigt ein erfindungsgemäß ausgebildetes Magnetventil, bei dem der Dichtsitz 103 und die radiale Ausdehnung des elastischen Bereichs 105 aufeinander ausgerichtet sind, d.h. auf einer Linie 120 liegen. Wie in Figur 3a wirken in Radialrichtung 63 gesehen außerhalb des Dichtsitzes 103 dieselben Kräfte, aufgrund des dort herrschenden Drucks B. Der Bereich zwischen Dichtsitz 103 und dem elastischem Bereich 105 ist durch diese Anordnung nicht mehr vorhanden, so das die Kraft 125 nicht mehr auftritt.
Es wirkt dann nur noch eine Kraft auf den elastischen Bereich 105, verursacht durch den Druck im Bereich B bzw. A.

Figur 4a und Figur 4b zeigen, welche Kräfte an dem elastischen Bereich 105 wirken, wobei der Dichtsitz 103 und eine radiale Ausdehnung des elastischen Bereichs 105 gemäss Figur 3b angeordnet sind.
Der elastische Bereich 105 bildet mit der Axialrichtung 60 einen Schnittwinkel, der zwischen größer 0° und kleiner 90° liegt. Die Kraft, aufgrund der unterschiedlichen Drücke im Bereich A und B, steht senkrecht auf einer Oberfläche des elastischen Bereichs 105. Figur 4b zeigt eine Aufspaltung dieser Kraft gemäss Figur 4a in Axialkräfte 112 und Radialkräfte 114, jeweils gekennzeichnet durch Pfeile. Die Axialkräfte 112 wirken wie die Kraft 125 in Figur 3a.

Figur 4c zeigt ein weiteres Ausführungsbeispiel eines erfindungsgemäß ausgebildeten Magnetventils 1. Das Dichtungs- und Dämpfungsglied 46 ist in diesem Beispiel in seinem elastischem Bereich 105 bogen- oder kreisförmig ausgebildet. Aufgrund der unterschiedlichen Drücke in den Bereichen A und B wirken an dem elastischen Bereich 105 Kräfte, die durch Pfeile gekennzeichnet sind.
Figur 4d zeigt wiederum die Aufspaltung dieser Kräfte gemäss Figur 4c in Axialkräfte 112 und Radialkräfte 114.
Aufgrund dieser Ausgestaltung des elastischen Bereichs 105 heben sich die Axialkräfte 112 auf, weil sie entgegengesetzt wirken, wodurch diese Kraft, die noch gemäss Figur 4b vorhanden ist, nicht mehr durch den Magneten 23 beim Öffnen des Magnetventils aufgebracht werden muss.
Dies hat Vorteile bei der Herstellbarkeit des Dichtungs- und Dämpfungsglieds 46 und ergibt einen besseren Druckausgleich, wodurch wieder ein besserer Kennlinienverlauf über den anliegenden Differenzdruck erzielt wird.

## Patentansprüche

1. Magnetventil (1), insbesondere zur Tankentlüftung bei Kraftfahrzeugen,
mit zumindest einer an einem Dichtsitz (103) gebildeten Ventilöffnung (15),
mit einem zur Freigabe und zum Verschließen der zumindest einen Ventilöffnung (15), mit dem Dichtsitz (103) zusammenwirkenden, von einem Elektromagneten (23) entgegen der Rückstellkraft einer Rückstellfeder (38) betätigten Ventilglied (41),
mit einem Magnetkern (35) eines Elektromagnets (23),
mit einem Dichtungs- und Dämpfungsglied (46),
das am Ventilglied (41) und am Magnetkern (35) angeordnet ist,
das das Ventilglied (41) und den Magnetkern (35) miteinander verbindet und
das zwischen dem Ventilglied (41) und dem Magnetkern (35) einen elastischen Bereich (105) aufweist,
**dadurch gekennzeichnet, dass**
der Dichtsitz (103) in Axialrichtung (60) mit einer radialen Ausdehnung des elastischen Bereichs (105) etwa auf einer Linie (120) liegt.

2. Magnetventil nach Anspruch 1,
**dadurch gekennzeichnet, dass**
der elastische Bereich (105) im axialen Querschnitt kreisförmig ausgebildet ist.

3. Magnetventil nach Anspruch 1,
**dadurch gekennzeichnet, dass**
der elastische Bereich (105) im axialen Querschnitt bogenförmig ausgebildet ist.

## Claims

1. Solenoid valve (1), in particular for venting a fuel tank, in motor vehicles, having at least one valve opening (15) which is formed at a sealing seat (103), having a valve element (41) which interacts with the sealing seat (103) in order to clear and to close the at least one valve opening (15), and is activated by an electromagnet (23) counter to the restoring force of a restoring spring (38), having a magnet core (35) of an electromagnet (23), having a sealing and damping element (46) which is arranged on the valve element (41) and on the magnet core (35) and which connects the valve element (41) and the magnet core (35) to one another and which has an elastic region (105) between the valve element (41) and the magnet core (35), **characterized in that** in the axial direction (60) the sealing seat (103) lies approximately on a line (120) with a radial extent of the elastic region (105).

2. Solenoid valve according to Claim 1, **characterized in that** the elastic region (105) is embodied so as to be circular in the axial cross section.

3. Solenoid valve according to Claim 1, **characterized in that** the elastic region (105) is embodied so as to be arcuate in the axial cross section.

## Revendications

1. Electrovanne (1), en particulier pour le dégazage de réservoirs de véhicules automobiles, comprenant au moins une ouverture de soupape (15) formée au niveau d'un siège de fermeture étanche (103), un élément de soupape (41) qui coopère avec le siège de fermeture étanche (103) pour libérer et obturer l'au moins une ouverture de soupape (15) et qui est actionné par un électro-aimant (23) à l'encontre de la force de rappel d'un ressort de rappel (38), un noyau magnétique (35) d'un électro-aimant (83), un organe d'étanchéité et d'amortissement (46) monté au niveau de l'élément de soupape (41) et du noyau magnétique (85), et qui relie l'élément de soupape (41) et le noyau magnétique (35) l'un à l'autre et qui présente une région élastique (105) entre l'élément de soupape (41) et le noyau magnétique (35),
**caractérisée en ce que**
dans la direction axiale (60), le siège de fermeture étanche (103) se trouve à peu prés sur une même ligne qu'un élargissement radial de la région élastique (105).

2. Electrovanne selon la revendication 1,
**caractérisée en ce que**
la région élastique (105) est de forme circulaire en coupe axiale.

3. Electrovanne selon la revendication 1,
**caractérisé en ce que**
la région élastique (105) est en forme d'arc en coupe axiale.
